# FASCICULE DE BREVET EUROPEEN

(11) **EP 2 443 334 B1**
(45) Date de publication et mention de la délivrance du brevet: **05.03.2014**
(21) Numéro de dépôt: 10723622.6
(22) Date de dépôt: 17.06.2010
(51) Int. Cl.: F02M 25/07, F16H 25/18, F16K 31/524, F16K 31/528

(54) **DISPOSITIF DE TRANSFORMATION DE MOUVEMENT ET VANNE COMPORTANT UN TEL DISPOSITIF**
BEWEGUNGSUMWANDLUNGSVORRICHTUNG UND VENTIL MIT EINER DERARTIGEN VORRICHTUNG
MOVEMENT TRANSFORMATION DEVICE AND VALVE COMPRISING SUCH A DEVICE

(30) Priorité: 17.06.2009 FR 0902946
(43) Date de publication de la demande: 25.04.2012
(73) Titulaire: Valeo Systèmes de Contrôle Moteur, 95800 Cergy Saint Christophe (FR)
(72) Inventeur: ALBERT, Laurent, F-60640 Verderie (FR); RIDOLFI, Gabriel, F-95000 Cergy (FR)
(86) Numéro de dépôt international: PCT/EP2010/058547
(87) Numéro de publication internationale: WO 2010/146120

(56) Documents cités:
- WO-A-2005/021954
- FR-A- 2 914 975
- US-A1- 2004 069 285

## Description

L'invention concerne un dispositif de transformation d'un mouvement de rotation d'une roue dentée en un mouvement de translation d'un coulisseau et une vanne comportant un tel dispositif. Une vanne de ce type est par exemple utilisable dans un circuit de recirculation de gaz d'échappement d'un moteur thermique de véhicule automobile.

### ARRIERE PLAN DE L'INVENTION

Le document générique FR 2 914 975 décrit un tel dispositif de transformation de mouvement et son application à une vanne de recirculation « EGR ». Les systèmes de recirculation de gaz d'échappement sont connus sous la dénomination EGR pour « Exhaust Gaz Recirculation » et permettent de réinjecter des gaz d'échappement à l'admission d'un moteur à explosion pour notamment réduire les émissions polluantes.

### OBJET DE L'INVENTION

L'invention a pour but de réduire le coût et l'encombrement d'un tel dispositif.

### BREVE DESCRIPTION DE L'INVENTION

A cet effet, l'invention vise un dispositif de transformation d'un mouvement de rotation d'une roue dentée en un mouvement de translation d'un coulisseau, le dispositif comprenant un organe support muni d'une paroi tubulaire fixe liée en translation au coulisseau par un chemin de came, la roue dentée étant montée à rotation sur l'organe support et étant liée en rotation au coulisseau qui est adapté à pivoter autour d'un axe, caractérisé en ce que la roue dentée comporte une bague montée à rotation sur la paroi tubulaire de l'organe support.

Dans un tel dispositif de transformation, la roue dentée est mise en position directement sur la paroi tubulaire ce qui garanti une meilleure coaxialité entre ces deux éléments. Il n'est alors pas nécessaire de coiffer l'organe support d'un pivot, ce qui rend le dispositif plus compact et plus simple à réaliser. L'organe support peut ainsi comporter un simple cylindre assurant la fonction de paroi tubulaire.

La roue dentée peut comporter une ouverture centrale d'accès au coulisseau.

Une telle ouverture centrale permet de loger des organes de manière plus compacte dans le dispositif. Par exemple, un capteur de position, qu'il soit rotatif ou linéaire, peut être logé dans l'ouverture centrale sans augmenter l'encombrement sur le dessus de l'organe support.

Le dispositif peut en outre comporter les caractéristiques suivantes, seules ou en combinaison :
- l'ouverture centrale peut donner accès à une portion du coulisseau située le long de son axe de pivotement ;
- La roue dentée peut comporter un logement d'entraînement en rotation du coulisseau ;
- le logement d'entraînement peut être défini par deux parois longitudinales s'étendant parallèlement à la direction de translation du coulisseau ;
- la roue dentée peut comporter une jupe dans le prolongement de la bague, les parois longitudinales étant rattachées à la jupe ;
- la bague peut être montée à rotation sur la paroi tubulaire par l'intermédiaire d'un roulement ;
- la paroi tubulaire peut comporter un lamage pour le montage du roulement ;
- la bague et la roue dentée peuvent être coaxiales.

Un autre objet de l'invention vise une vanne comportant un actionneur rotatif et une soupape reliés ensemble par un dispositif de transformation de mouvement de sorte que l'actionneur soit adapté à fermer et ouvrir la soupape, le dispositif de transformation de mouvement étant tel que décrit ci-dessus et la soupape faisant partie du coulisseau.

La vanne peut comporter les caractéristiques suivantes, seules ou en combinaison :
- l'ouverture centrale peut donner accès à une portion du coulisseau située le long de l'axe suivant lequel s'étend la queue de la soupape ;
- le coulisseau peut comporter une soupape et un barreau fixé transversalement à la queue de la soupape ;
- la queue de la soupape peut être fixée dans un trou traversant du barreau, la roue dentée peut comporter une ouverture centrale d'accès direct à la queue de la soupape ;
- elle peut comporter un capteur de la position de la soupape disposé dans l'ouverture centrale ;
- elle peut également comporter un capot de protection, le capteur étant monté sur la face interne de ce capot.

### BREVE DESCRIPTION DES DESSINS

L'invention sera mieux comprise à la lumière de la description qui va suivre d'un mode de réalisation préféré et non limitatif, description faite en référence aux dessins annexés, parmi lesquels :
- la figure 1 représente en perspective une vanne comportant un dispositif de transformation de mouvement selon l'invention, ce dernier étant représenté en coupe partielle ;
- la figure 2 est une vue en perspective avec coupe partielle du dispositif de transformation de mouvement de la figure 1 ;
- la figure 3 est une vue de détail en coupe de la figure 2 ;
- la figure 4 est une vue de dessus du dispositif de la figure 2 ;
- la figure 5 est une vue partielle en coupe de la vanne de la figure 1 coiffée d'un capot.

### DESCRIPTION DETAILLEE DE L'INVENTION

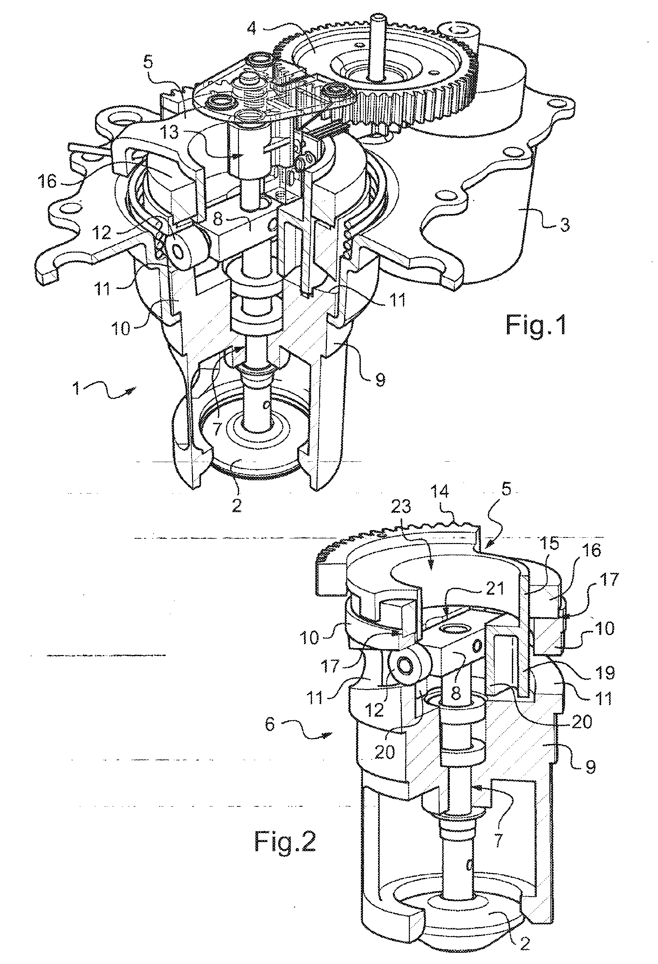

La figure 1 représente une vanne 1 qui est dans le présent exemple une vanne de recirculation de gaz d'échappement dont la fonction est classique. La vanne 1 comporte une soupape 2 qui permet l'introduction et le dosage d'un fluide, ici les gaz d'échappement, dans une canalisation, ici d'admission.

Une telle vanne 1 comporte un moteur 3 engrenant avec une roue de transmission 4 qui elle-même engrène avec une roue dentée 5. Le moteur 3 est ainsi adapté à entraîner en rotation la roue dentée 5. Le mouvement de rotation de cette roue dentée 5 est par ailleurs transformé en mouvement de translation de la soupape 2 grâce à un dispositif de transformation de mouvements 6. Le dispositif 6 comporte à cet effet d'un organe support 9 muni de paliers 7 pour le guidage longitudinal de la queue de la soupape 2. L'organe support 9 comporte une paroi tubulaire 10 munie d'un chemin de came 11 avec lequel coopère un barreau 8 fixé à l'extrémité de la queue de la soupape 2 (par goupillage, emmanchement en force, soudure, ou tout autre moyen de fixation). Le chemin de came 11 est ici formé de deux pistes de part et d'autre de la paroi tubulaire 10 (voir figure 2), étant entendu qu'il peut en comporter un quelconque nombre adapté. Il peut ainsi ne comporter qu'une seule piste ou un nombre supérieur à deux.

Ce barreau 8 est muni à chacune de ses extrémités d'un galet 12 coopérant avec le chemin de came 11 de sorte que, lorsque la roue dentée est entraînée en rotation, celle-ci entraîne à son tour le barreau 8 en rotation provocant, grâce au parcours du galet 12 dans le chemin de came 11, la translation de la soupape 2.

La soupape 2 et le barreau 8 sont fixes l'un par rapport à l'autre et forment ensemble un coulisseau dont le déplacement en translation répond à la rotation de la roue dentée 5. D'autres éléments qui seraient rigidement liés à la soupape 2 feraient également partie du coulisseau.

La vanne 1 comporte de plus un capteur linéaire 13 permettant de rendre compte de la position longitudinale de la soupape 2.

La figure 2 montre l'organe support 9 isolé de la vanne 1. La roue dentée 5 comporte une portion dentée 14 permettant l'engrènement avec la roue de transmission 4. Cette portion dentée ne s'étend dans le présent exemple que sur un secteur angulaire correspondant à la course linéaire requise pour la soupape 2. La portion dentée peut bien entendu s'étendre sur un secteur angulaire différent, voire sur tout le pourtour de la roue dentée si nécessaire, en fonction de la plage dans laquelle le coulisseau 2, 8 est prévu pour se translater.

La roue dentée 5 comporte également une bague 15 qui s'étend dans la direction de l'axe de rotation de la roue dentée 5 de sorte que cette bague 15 forme une portion tubulaire de montage. La bague 15 est coaxiale à l'axe de rotation de la roue dentée 5. La roue dentée 5 est montée à rotation sur l'organe support 9 grâce à l'ajustement de la bague 15 sur la bague interne d'un roulement 16 dont la bague externe est quant à elle ajustée sur la paroi tubulaire 10 de l'organe support 9. Le roulement 16 est représenté schématiquement sur les figures.

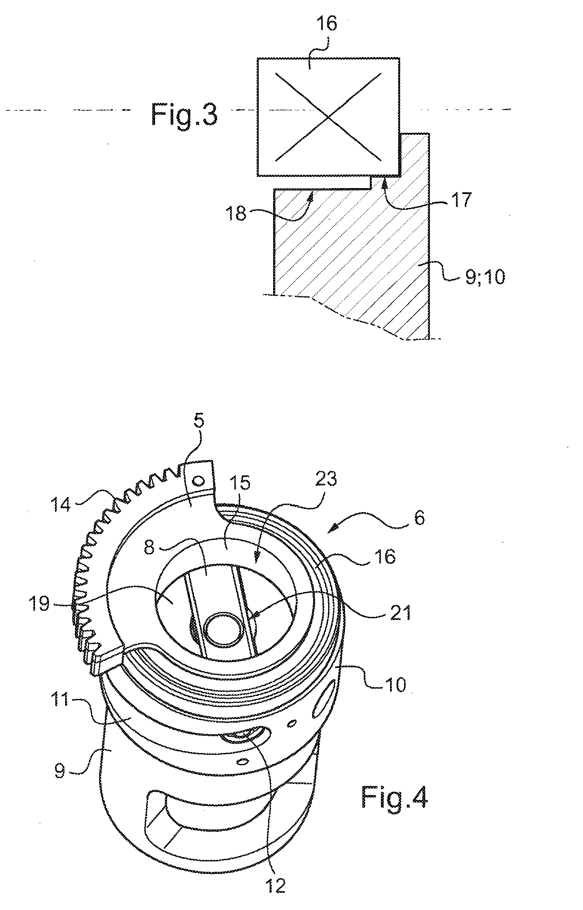

Plus précisément, dans le présent exemple, la paroi tubulaire 10 comporte un lamage 17 dans lequel le roulement 16 prend place. Le profil optimal de la liaison entre la paroi tubulaire 10 et le roulement 16 est représenté, pour cet exemple, sur la coupe de la figure 3. Le lamage 17 permet l'appui de la bague extérieure du roulement 16 tandis qu'un dégagement 18 sépare la paroi tubulaire 10 du reste du roulement 16 pour éviter les frottements parasites.

La roue dentée 5 est ainsi montée tournante sur la paroi tubulaire 10 par l'intermédiaire du roulement 16 de sorte que la rotation de la portion dentée 14 se fasse coaxialement à la direction de translation de la soupape 2. En variante, le roulement 16 peut être remplacé par un autre type de liaison pivot, un palier ou une bague à faible coefficient de friction, par exemple. La bague 15 de la roue dentée 5 peut également être montée directement sur la paroi tubulaire 10 si les matériaux-employés, éventuellement avec un traitement de surface ou un revêtement, présentent un coefficient de friction adéquat.

La bague 15 de la roue dentée 5 se prolonge par une jupe 19 prévue pour coopérer avec le barreau 8. Cette jupe 19 comporte deux parois longitudinales 20 parallèles entre elles et s'étendant parallèlement à la direction de translation de la soupape 2. Les deux surfaces longitudinales 20 définissent entre elles un logement 21 pour le barreau 8 (voir figure 4). Ainsi, le barreau 8 est disposé dans le logement 21 de sorte que la roue dentée 5 soit apte à entraîner en rotation le barreau 8 par l'intermédiaire des parois longitudinales 20, et que le barreau 8 soit libre de coulisser dans le logement 21 dans la direction de translation de la soupape 2.

Par conséquent, au sein de la vanne 1, la rotation de la roue dentée 5 entraîne la rotation du barreau 8 dont les galets 12 roulent alors sur le chemin de came 11 fixe (car l'organe support 9 est fixe par rapport à la roue dentée 5 et au coulisseau 2, 8) ce qui entraîne conjointement la translation du coulisseau-2, 8 dans le sens d'ouverture ou de fermeture de la soupape 2.

La roue dentée 5 comporte également une ouverture centrale 23 d'accès au coulisseau 2, 8. Le volume interne de la bague 15 est ici creux et est ainsi mis à profit pour constituer un espace libre permettant d'y installer des composants supplémentaires utiles au fonctionnement de la vanne 1. De plus, cet espace libre donne accès par le dessus au coulisseau 2, 8, ce qui permet d'y installer des composant prévus par exemple pour coopérer avec la queue de la soupape 2 ou le barreau 8.

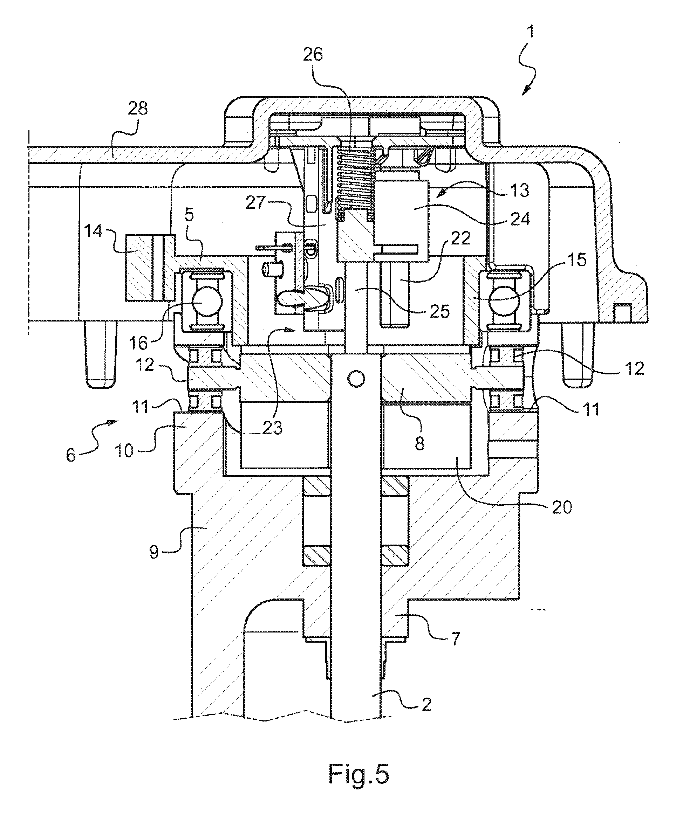

Dans le présent exemple, cet espace libre est mis à profit pour installer un capteur 13. En référence aux figures 1 et 5, la vanne 1 comporte en effet un capteur 13 de la position en translation de la soupape 2. La position du coulisseau 2, 8 (dont fait ici partie la soupape 2) est, dans le présent exemple, relevée grâce à un capteur de position linéaire classique. Un exemple de capteur de position linéaire est donné dans le document EP1503181. Tout type de capteur permettant de relever la position du coulisseau 2, 8 peut être employé. Le capteur 13 du présent exemple comporte une tige de guidage 22 sur laquelle coulisse un cylindre 24 qui est rattaché à un palpeur 25 maintenu au contact de la queue de soupape par un ressort 26. Le palpeur 25 suit les mouvements de va et vient de la soupape 2 tandis qu'un dispositif de mesure 27, comportant généralement une sonde à effet Hall (voir document EP1503181), fourni un signal représentatif de la position linéaire du palpeur 15 et donc de- la soupape 2. Le dispositif de mesure 27, la tige de guidage 22 (avec les éléments qui y sont reliés) sont fixés sous le capot 28 qui est représenté figure 5 et qui permet par ailleurs de protéger les différents organes de la vanne 1. Grâce au logement 21, la pose d'un tel capteur 13 se fait sans augmentation sensible de l'encombrement de la vanne.

Des variantes de réalisation de l'invention pourront être envisagées sans sortir du cadre de l'invention. Notamment, les parois longitudinales 20 peuvent avoir une forme alternative, elles peuvent être réalisées selon une quelconque forme permettant d'entraîner en rotation le barreau 8 lors de la rotation de la roue dentée 5.

## Revendications

1. Dispositif de transformation d'un mouvement de rotation d'une roue dentée (5) en un mouvement de translation d'un coulisseau (2, 8), comprenant une soupage (2) et un barreau (8) fixes l'un par rapport à l'autre, le dispositif comprenant un organe support (9) muni d'une paroi tubulaire (10) fixe liée en translation au coulisseau (2, 8) par un chemin de came (11), la roue dentée (5) étant montée à rotation sur l'organe support (9) et étant liée en rotation au coulisseau (2, 8) qui est adapté à pivoter autour d'un axe, **caractérisé en ce que** la roue dentée (5) comporte une bague (15) montée à rotation sur la paroi tubulaire (10) de l'organe support (9).

2. Dispositif selon la revendication 1, dans lequel la roue dentée (5) comporte une ouverture centrale (23) d'accès au coulisseau (2, 8).

3. Dispositif selon la revendication 2, dans lequel l'ouverture centrale (23) donne accès à une portion du coulisseau (2, 8) située le long de son axe de pivotement.

4. Dispositif selon l'une des revendications 1 à 3, dans lequel la roue dentée (5) comporte un logement (21) d'entraînement en rotation du coulisseau (2, 8).

5. Dispositif selon la revendication 4, dans lequel le logement d'entraînement (21) est défini par deux- parois longitudinales (20) s'étendant parallèlement à la direction de translation du coulisseau (2, 8).

6. Dispositif selon la revendication 5, dans lequel la roue dentée (5) comporte une jupe (19) dans le prolongement de la bague (15), les parois longitudinales (20) étant rattachées à la jupe (19).

7. Dispositif selon l'une des revendications 1 à 6, dans lequel la
bague (15) est montée à rotation sur la paroi tubulaire (10) par l'intermédiaire d'un roulement (16).

8. Dispositif selon la revendication 7, dans lequel la paroi tubulaire (10) comporte un lamage (17) pour le montage du roulement (16).

9. Dispositif selon l'une des revendications 1 à 8, dans lequel la bague (15) et la roue dentée (5) sont coaxiales.

10. Vanne (1) comportant un actionneur rotatif (3) et une soupape (2) reliés ensemble par un dispositif de transformation de mouvement de sorte que l'actionneur (3) soit adapté à fermer et ouvrir la soupape (2), **caractérisé en ce que** le dispositif de transformation de mouvement est conforme à l'une des revendications 1 à 9, la soupape (2) faisant partie du coulisseau (2, 8).

11. Vanne selon la revendication 10, dans laquelle l'ouverture centrale (23) donne accès à une portion du coulisseau (2, 8) située le long de l'axe suivant lequel s'étend la queue de la soupape (2).

12. Vanne selon la revendication 11, dans laquelle le coulisseau comporte la soupape (2) et un barreau (8) fixé transversalement à la queue de la soupape (2).

13. Vanne selon la revendication 12, dans laquelle la queue de la soupape (2) est fixée dans un trou traversant du barreau (8), et dans laquelle la roue dentée (5) comporte une ouverture centrale (23) d'accès direct à la queue de la soupape (2).

14. Vanne selon la revendication 13, comportant en outre un capteur (13) de la position de la soupape (2) disposé dans l'ouverture centrale (23).

15. Vanne selon la revendication 14, comportant en outre un capot de protection (28), le capteur (13) étant monté sur la face interne du capot (28).

## Patentansprüche

1. Vorrichtung zur Umwandlung einer Drehbewegung eines Zahnrads (5) in eine Translationsbewegung eines Schiebers (2, 8), der ein Ventil (2) und einen Stab (8) enthält, die zueinander ortsfest sind, wobei die Vorrichtung ein Trägerelement (9) enthält, das mit einer ortsfesten rohrförmigen Wand (10) versehen ist, die in Translation mit dem Schieber (2, 8) über eine Nockenbahn (11) verbunden ist, wobei das Zahnrad (5) drehbar auf das Trägerelement (9) montiert und in Drehung mit dem Schieber (2, 8) verbunden ist, der um eine Achse schwenken kann, **dadurch gekennzeichnet, dass** das Zahnrad (5) einen Ring (15) aufweist, der auf die rohrförmige Wand (10) des Trägerelements (9) montiert ist.

2. Vorrichtung nach Anspruch 1, wobei das Zahnrad (5) eine zentrale Öffnung (23) für den Zugang zum Schieber (2, 8) aufweist.

3. Vorrichtung nach Anspruch 2, wobei die zentrale Öffnung (23) Zugang zu einem Abschnitt des Schiebers (2, 8) ermöglicht, der sich entlang seiner Schwenkachse befindet.

4. Vorrichtung nach einem der Ansprüche 1 bis 3, wobei das Zahnrad (5) eine Aufnahme (21) zum Drehantrieb des Schiebers (2, 8) aufweist.

5. Vorrichtung nach Anspruch 4, wobei die Antriebsaufnahme (21) von zwei Längswänden (20) definiert wird, die sich parallel zur Translationsrichtung des Schiebers (2, 8) erstrecken.

6. Vorrichtung nach Anspruch 5, wobei das Zahnrad (5) eine Schürze (19) in der Verlängerung des Rings (15) aufweist, wobei die Längswände (20) an der Schürze (19) befestigt sind.

7. Vorrichtung nach einem der Ansprüche 1 bis 6, wobei der Ring (15) mittels eines Wälzlagers (16) drehbar auf die rohrförmige Wand (10) montiert ist.

8. Vorrichtung nach Anspruch 7, wobei die rohrförmige Wand (10) eine Senkung (17) für die Montage des Wälzlagers (16) aufweist.

9. Vorrichtung nach einem der Ansprüche 1 bis 8, wobei der Ring (15) und das Zahnrad (5) koaxial sind.

10. Ventil (1), das einen drehbaren Stellantrieb (3) und ein Ventil (2) aufweist, die miteinander durch eine Bewegungsumwandlungsvorrichtung verbunden sind, so dass der Stellantrieb (3) geeignet ist, das Ventil (2) zu schließen und zu öffnen, **dadurch gekennzeichnet, dass** die Bewegungsumwandlungsvorrichtung einem der Ansprüche 1 bis 9 entspricht, wobei das Ventil (2) Teil des Schiebers (2, 8) ist.

11. Ventil nach Anspruch 10, wobei die zentrale Öffnung (23) den Zugang zu einem Abschnitt des Schiebers (2, 8) ermöglicht, der sich entlang der Achse befindet, gemäß der sich der Schaft des Ventils (2) erstreckt.

12. Ventil nach Anspruch 11, wobei der Schieber das Ventil (2) und einen Stab (8) aufweist, der quer zum Schaft des Ventils (2) befestigt ist.

13. Ventil nach Anspruch 12, wobei der Schaft des Ventils (2) in einem Durchgangsloch des Stabs (8) befestigt ist, und wobei das Zahnrad (5) eine zentrale Öffnung (23) für den Zugang zum Schaft des Ventils (2) aufweist.

14. Ventil nach Anspruch 13, das außerdem einen Sensor (13) der Stellung des Ventils (2) aufweist, der in der zentralen Öffnung (23) angeordnet ist.

15. Ventil nach Anspruch 14, das außerdem eine Schutzhaube (28) aufweist, wobei der Sensor (13) auf die Innenseite der Haube (28) montiert ist.

## Claims

1. Device for converting a rotational movement of a gearwheel (5) into a translational movement of a slide (2, 8) comprising a valve shutter (2) and a bar (8) that are fixed relative to one another, the device comprising a support member (9) equipped with a fixed tubular wall (10) translationally connected to the slide (2, 8) by a camway (11), the gearwheel (5) being mounted so that it can rotate on the support member (9) and being connected in rotation to the slide (2, 8) which is able to pivot about an axis, **characterized in that** the gearwheel (5) comprises a ring (15) mounted to rotate on the tubular wall (10) of the support member (9).

2. Device according to Claim 1, in which the gearwheel (5) has a central opening (23) providing access to the slide (2, 8).

3. Device according to Claim 2, in which the central opening (23) provides access to a portion of the slide (2, 8) which portion lies along the axis of pivoting thereof.

4. Device according to one of Claims 1 to 3, in which the gearwheel (5) comprises a housing (21) for the rotational drive of the slide (2, 8).

5. Device according to Claim 4, in which the drive housing (21) is defined by two longitudinal walls (20) running parallel to the direction of translational movement of the slide (2, 8).

6. Device according to Claim 5, in which the gearwheel (5) comprises a skirt (19) in the continuation of the ring (15), the longitudinal walls (20) being attached to the skirt (19).

7. Device according to one of Claims 1 to 6, in which the ring (15) is mounted to rotate on the tubular wall (10) via a rolling bearing (16).

8. Device according to Claim 7, in which the tubular wall (10) has a counterbore (17) in which to mount the rolling bearing (16).

9. Device according to one of Claims 1 to 8, in which the ring (15) and the gearwheel (5) are coaxial.

10. Valve (1) comprising a rotary actuator (3) and a valve shutter (2) which are joined together by a movement conversion device such that the actuator (3) is able to close and open the valve shutter (2), **characterized in that** the movement conversion device is in accordance with one of Claims 1 to 9, the valve shutter (2) forming part of the slide (2, 8).

11. Valve according to Claim 10, in which the central opening (23) provides access to a portion of the slide (2, 8) which portion lies along the axis along which the stem of the valve shutter (2) extends.

12. Valve according to Claim 11, in which the slide comprises the valve shutter (2) and a bar (8) fixed transversely to the stem of the valve shutter (2).

13. Valve according to Claim 12, in which the stem of the valve shutter (2) is fixed in a through-hole in the bar (8), and in which the gearwheel (5) comprises a central opening (23) providing direct access to the stem of the valve shutter (2).

14. Valve according to Claim 13, further comprising a sensor (13) that senses the position of the valve shutter (2) and is arranged in the central opening (23).

15. Valve according to Claim 14, further comprising a protective cap (28), the sensor (13) being mounted on the interior face of the cap (28).
